(19) Europäisches Patentamt
European Patent Office
Office européen des brevets

(11) EP 0 837 156 A1

# (12) EUROPEAN PATENT APPLICATION

(43) Date of publication:
22.04.1998 Bulletin 1998/17

(51) Int. Cl.$^6$: **C23F 11/10**, C10M 141/06, C10M 169/04

(21) Application number: 96202871.8

(22) Date of filing: 15.10.1996

(84) Designated Contracting States:
AT BE CH DE DK ES FI FR GB GR IE IT LI LU MC NL PT SE

(71) Applicant:
Quaker Chemical Corporation
Wilmington, Delaware 19809 (US)

(72) Inventors:
• van der Veer, Jan Marcel
NL-1422 Uithoorn (NL)
• Mulder, Hendrik Laurens
NL-3641 XV Mijdrecht (NL)

• Streefland,Gerardus,J.J,
NL-3581 XZ Utrecht (NL)
• Vanbrabant, Johan
8550 Zwevegem (BE)
• Deruyck, Frank
9810 Nazareth (BE)

(74) Representative:
de Bruijn, Leendert C. et al
Nederlandsch Octrooibureau
P.O. Box 29720
2502 LS Den Haag (NL)

## (54) Corrosion inhibiting composition, in particular suitable for application on steel cords

(57) The invention relates to a corrosion inhibiting composition, comprising at least:

A) a carrier of an oily or waxy type;
B) active components comprising at least

B1) a corrosion-inhibitor of the azole-type; and
B2) a co-corrosion-inhibitor, selected from the group consisting of

(a) fatty acids having 6-24 carbon atoms, aromatic acids and naphthenic acids, which acids have the free acid form or the salt form;
(b) imidazoline derivatives having an $C_{6-24}$ alkyl moiety; and
(c) $C_{6-24}$ alkylsuccinic anhydride compounds; as well as a mixture of compounds defined under (a), (b) and/or (c); and

C) optionally a compound selected from the group consisting of

C1) a water repellent;
C2) a synthetic ester derived from a $C_{1-10}$ alcohol with 1-12 hydroxyl groups and $C_{6-24}$ fatty acids; and
C3) a $C_{6-18}$ alcohol as well as a mixture of compounds defined under C1), C2) and/or C3).

Such a composition is suitable for application on elongated objects of steel, covered with a coating of a material having an electrode potential, exceeding the electrode potential of steel or having a rate of corrosion, which is less than the rate of corrosion of steel. Further the invention relates to elongated objects of steel, in particular steel cords treated with a corrosion inhibiting composition according to the invention. Another object of the invention is a process for treating elongated objects of steel with the corrosion inhibiting composition according to the invention. Rubber articles, which contain elongated objects of steel like steel cord, treated with the above-mentioned composition do also fall within the scope of the invention.

## Description

<u>Area of the invention</u>

The invention relates to a corrosion inhibiting composition, suitable for application on elongated objects of steel, covered with a coating of a material having an electrode potential, exceeding the electrode potential of steel or having a rate of corrosion, which is less than the rate of corrosion of steel. Further the invention relates to elongated objects of steel, in particular steel cords, treated with a corrosion inhibiting composition according to the invention. Another object of the invention is a process for treating elongated objects of steel with the corrosion inhibiting composition according to the invention. A further object of the invention relates to rubber articles containing the elongated steel objects, treated with a corrosion inhibiting composition according to the invention.

<u>Background of the invention</u>

Corrosion inhibiting compositions, typically in the form of solutions, suspensions or emulsions are commonly employed in the metal working industry to provide improved corrosion resistance of the metal objects involved. An example of such metal objects is steel cord, which is applied in rubber articles as metal reinforcement. Corrosion of steel cord may occur in the manufacturing process, during storage and transport of the steel cord as well as during and after the application of the steel cord in the rubber articles. In this respect it is remarked that always a certain amount of moisture is present in said rubber articles whereas additional moisture may penetrate the rubber articles by way of diffusion and in particular by way of hair cracks and other imperfections.

In the prior art many corrosion inhibiting compositions have been used. For instance, in DE-A 2,704,190 a method is disclosed for improving the corrosion resistance of steel cord coated with a Zn, brass or bronze layer by dipping it just long enough in a sodium nitrite or potassium nitrite solution for moistening to occur and then drying it at a temperature below 150°C.

Another method for providing corrosion protection to steel cord to be embedded in rubber articles like tires is disclosed in JP 02227304 A2. According to said document the tires have interior layers containing water-absorbing polymers and exterior layers of halobutyl rubbers.

Further it is known to apply a corrosion inhibiting composition, comprising specific reaction products like the product 6[2,4-bis(allylamino)-s-triazin-6-ylamino]-2-mercaptobenzothiazole as disclosed in Example 10(B) of EP 331279 A2 to brass coated steel cord.

As apparent from the above it is known from the prior art to apply corrosion inhibiting compositions to steel cord resulting in an improved corrosion resistance of the treated steel cord. However, such an improvement of the corrosion resistance may result in a considerable loss of the adherence between the steel cord and the rubber comprising the steel cord as a reinforcing means.

In view of the above the invention is directed to a method for avoiding above disadvantage, i.e. to develop a corrosion inhibiting composition which decreases the level of corrosion of the steel cord and hardly affects the adherence between the reinforcing means made of steel like a tire cord and rubber. Further the invention should particularly relate to compositions which are environmentally acceptable.

<u>Summary of the invention</u>

The above aim is achieved by means of a corrosion inhibiting composition, characterized in that it comprises

A) a carrier of an oily or waxy type;
B) active components comprising at least

   B1) a corrosion-inhibitor of the azole-type; and
   B2) a co-corrosion-inhibitor, selected from the group consisting of

      (a) fatty acids having 6-24 carbon atoms, aromatic acids and naphthenic acids, which acids have the free acid form or the salt form;
      (b) imidazoline derivatives having an $C_{6-24}$ alkyl moiety; and
      (c) $C_{6-24}$ alkylsuccinic anhydride compounds; as well as a mixture of compounds defined under (a), (b) and for (c); and

C) optionally a compound selected from the group consisting of

C1) a water repellent;

C2) a synthetic system derived from a $C_{1-10}$ alcohol with 1-12 hydroxyl groups and $C_{6-24}$ fatty acids; and

C3) a $C_{6-18}$ alcohol

as well as a mixture of compounds defined under C1, C2 and/or C3.

The compositions according to the invention are suitable for protecting elongated steel objects like steel wire or steel cord composed of several steel filaments from corrosion.

The elongated steel objects may have been covered by a metal or plastic coating which, however, do not coat the steel object completely.

In case of steel cord the benefits of using the compositions according to the invention may be summarized as follows:

(a) the compositions impart steel cord, treated with these compositions, with adequate resistance against corrosion,

(b) the compositions impede adhesion of rubber to steel cord, treated with these compositions, after embedding said steel cord in rubber and subsequent vulcanising, to an acceptable level. The compositions do hardly interfere with the delicate physicochemical processes which anchors steel cord to rubber during vulcanisation; and

(c) after vulcanisation of the rubber in which steel cord is embedded, the compositions according to the invention continue to impart to steel cord some degree of corrosion resistance.

In view of the above a further object of the invention encompasses the elongated steel objects like steel cord, treated with the composition according to the invention.

Another object of the invention relates to a process for manufacturing a corrosion resistant elongated steel object comprising the following steps:

(a) covering the elongated steel object with a coating layer having an electrode potential exceeding the electrode potential of steel or having a rate of corrosion, which is less than the rate of corrosion of steel;

(b) drawing the elongated steel object up to the final diameter; and

(c) at least partly covering the elongated steel object with a corrosion inhibiting composition according to the invention.

A further object of the invention relates to rubber articles, provided with reinforcing means, like steel cord, treated with a composition according to the invention. Such reinforced rubber articles are for instance power transmission belts, conveyor belts, rubber hoses and tyres of any type.

Detailed description of the invention

(A) THE COMPOSITIONS

The components of the composition according to the invention can be elucidated by the following detailed description.

Carrier

The corrosion inhibiting compositions or corrosion preventives according to the invention typically contain one or more carriers. They are to be considered as the carriers of the active additives and more specifically the corrosion inhibitors. To a certain extent the carrier itself may have corrosion preventing properties, especially due to its hydrophobic character. Carriers may be of mineral, animal, vegetable or synthetic origin. By mixing non-polar with more polar compounds the solubility characteristics can be adjusted to allow the additives to be solubilized.

Carriers of mineral origin include mineral oils and waxes. Examples of mineral carriers useful in the invention include naphthenic and paraffinic oils and waxes. Mineral oils and waxes are commercially available from Exxon, Shell, and Sun oil companies.

Carriers of animal origin include natural fats and oils such as lard oil, sperm oil, and tallow. Renderings from meat and fish production are primary sources of such animal based lubricants.

Carriers of vegetable origin include cottonseed oil, corn oil, castor oil, rapeseed oil and tall oil. These oils may be produced directly, or may result as a byproduct of other processes such as the pulping of wood.

Carriers of synthetic origin include esters such as polyol esters. Typical synthetic esters which may serve as co-carriers of the present invention are inter alia described in U.S. Patent 3,526,596, and comprise the esters of fatty acids where the alcohol has 1 to 12 hydroxyl groups and the fatty acid has 6 to 24 carbon atoms. Other representative synthetic ester carriers are described in U.S. Patent 3,681,440 (the esters of organic monocarboxylic acids and dineoalkyl ethers with a tetrahydroxy functionality), U.S. Patent 4,178,261 (esters incorporating 6-cyclohexylhexanoic acid and a polyhydric alcohol), U.S. Patent 4,871,476 (esters of cyclohexanol or cyclohexanecarboxylic acid in combination with 1% to 70% by weight of a branched poly-$\alpha$-olefin), U.S. Patent 4,786,427 (diesters formed from dicarboxylic acids and monohydric compounds), U.S. Patent 4,978,468 (cyclohexyl esters in combination with from 0.1 to 95% by weight of a polymer selected from hydrocarbonic polymers and polyesters).

Other synthetic carriers useful for the present invention include polyolefin oils (synthetic hydrocarbon oils), polyether oils including polyoxyalkylene glycols, polyalkylene oxide-ester oils, hydrocarbon polymers, and mono- or polyhydric alcohols having at least 5 carbon atoms.

Corrosion inhibitors

A typical corrosion inhibitor is selected from the families of the azoles. Illustrative azole-type corrosion inhibitors are benzotriazole, tolutriazole, the sodium salt of mercapto-benzotriazole, naphthotriazole, methylene bis-benzotriazole, dodecyltriazole and butylbenzotriazole, preferably tolutriazole. A suitable, commercially available form of benzotriazole which may be used in the invention is CORBRATEC®, marketed by PMC Specialties Group, Inc. (Rockey River, Ohio). Other non-ferrous corrosion inhibitors suitable to be used in the composition according to the invention will be readily apparent to an average skilled artisan.

Co-corrosion inhibitors

A class of compounds incorporated into the composition according to the invention, and serving to enhance the corrosion preventing properties of the composition are organic acids, like fatty acids, aromatic acids and naphthenic acids and salts thereof. Fatty acids include natural or synthetic fatty acids having from 6 to about 24 carbon atoms. Representative fatty acids include, without limitation, lauric, lauroleic, myristic, myristoleic, arachidic, eicosapolyenoic, pentadecanoic, palmitic, palmitoleic, margaric, stearic, oleic, linoleic, eicosenoic, behenic, dihydroxyl stearic, licanic, docosenoic, docosapolyenoic, tallow fatty acids and tall oil fatty acids.

Representative counterions in the soaps of the fatty acids are Li, Na, K, Ca, Mg, Ba and Sr. Also amines, like TEA, MEA, DEA, AMP, etc., may be used to neutralize the organics for soap formation.

Aromatic acids include benzoic acid compounds substituted by one or more hydrophobic groups like $C_{6-24}$ alkyl groups. Further the aromatic acids may also have the salt form like alkaline, alkaline-earth, ammonium and amine salts.

Naphthenic acids are marketed products having the CAS Registry Number 64754-89-8 and 1338-24-5. More in particular naphthenic acids represent a complex combination of compounds. Said acids contain carboxylic acid functional groups and five- to six-member naphthenic rings in their molecular structure. Preferably the naphthenic acid is a naphthenic-13 acid used in the salt form like alkaline, alkaline-earth and ammonium salt, most preferably in the barium salt form.

Another class of compounds which also may be incorporated into the composition according to the invention, and which serve to enhance the corrosion preventing properties of the composition are imidazolines, having a $C_{6-24}$ alkyl moiety. For instance imidazoline phosphate esters having a $C_{6-24}$ alkyl group may be used.

Still another class of compounds which may be incorporated into the composition of the invention, and which serve to enhance the corrosion preventing properties of the composition are $C_{6-24}$ alkyl-succinic anhydrides, like undecyl, dodecyl and tridecyl succinic anhydride or mixtures thereof.

Water repellants

Water repellants can be part of the composition to support the action of the corrosion inhibitors by preventing the presence of water at the steel/rubber interface. Suitable water repellants are $C_{1-5}$ alcohols and $C_{1-5}$ alkylglycols, preferably and butyldiethyleneglycol (= 2-(butoxy-ethoxy)ethanol), having the CAS-number 112-34-5.

Synthetic esters

Synthetic esters are applied for providing a good corrosion inhition rating but more in particular for decreasing the adherence loss rating to a minimum. Said synthetic esters are derived from $C_{1-10}$ alcohols with 1-12 hydroxyl groups and $C_{6-24}$ fatty acids. Examples of such esters are the esters of neopentylglycol and $C_{8-18}$ technical fatty acids and the esters of neopentylglycol and cocos fatty acids.

4

C$_{6-18}$ alcohols

C$_{6-18}$ alcohols are also applied for providing a good corrosion inhibition rating and a minimal adherence loss rating. Preferably technical alcohol mixtures like C$_{12-13}$ technical alcohol are used.

The composition according to the invention may contain further additives. Examples thereof are mentioned below.

Stabilizers

Stabilizers might be needed to impart sufficient storage stability of the composition according to the invention. Some components have limited solubility in the carrier which may result in separation of these components from the composition during storage or use. Esters and natural or synthetic fatty alcohols may be applied to overcome this.

Anti-oxidants

The composition according to the invention may also contain one or more antioxidants for improving the storage life of the compositions. Suitable aromatic amine antioxidants include phenothiazine, iminodibenzyl, diphenylamine, phenyl-$\alpha$-naphthylamine and phenyl-$\beta$-naphthylamine. Particularly suited are the alkylated aromatic amines.

When an antioxidant is present in the composition, the antioxidant preferably ranges up to about 0.5% of the total weight of the composition. More preferably the antioxidant is present in an amount of about 0.1 to about 0.3%.

Finally it is brought to the fore that the percentage of the carrier, present in the composition according to the invention may range between wide limits like 65-95% calculated on the total weight of the composition. Concerning the other components of the composition according to the invention it is remarked that the mutual percentages may also range between wide limits. For instance the percentage of

- the corrosion inhibitor is 0.05 - 5%,
- the percentage of the co-corrosion-inhibitor is 4.9 - 20%,
- the percentage of the water-repellant is 0.05-5%,
- the percentage of the synthetic ester is 0-20%, preferably 5-15%, and
- the percentage of the C$_{6-18}$ alcohol is 0-15%, preferably 4-11% calculated on the total weight of the composition.

## (B) THE FIGURES

The invention will be elucidated by means of the following two figures:

Fig. 1 illustrates a schematic view of the method according to which the corrosion inhibiting composition according to the invention is applied on a steel filament;
Fig. 2 illustrates an electric equivalent circuit, applied for corrosion studies.

## (C) APPLICATION OF THE COMPOSITION ON STEEL CORD AND THE MEASUREMENT OF THE RELEVANT PROPERTIES.

A steel cord used in the process according to the invention is manufactured as follows.

Starting from a marketed rod wire, the wire is drawn in several phases until an intermediate diameter is reached. After reaching the intermediate diameter the wire is electrolytically coated with copper and subsequently with zinc, after which a thermodiffusion occurs resulting in a brass coating around the wire. Typically the brass coating has a copper content between 60 and 70% by weight. The wire, having the intermediate diameter is normally completely coated with the brass coating layer. Then the wire having the intermediate diameter is drawn to a smaller final diameter, normally by means of wet-drawing machines. During the wet-drawing the brass coating layer becomes successively porous: the coating layer becomes thinner and thinner and shows local cracks where the steel comes to the surface.

The porosity may be expressed in a quantitative way as the percentage of iron coming to the surface next to the brass coating layer, and can be determined according to Notter I.M., Gabe D.R. and Warwick M.E.,. "Polarization resistance methods for measurement of the porosity of tin coatings on steel", Trans. IMF 1986, 64, 105-109, and according to Notter I.M. and Gabe D.R., "Porosity of electrodeposited coatings: its cause, nature, effect and management", Corr.Rev. 10, 1992 3/4, 217-280. Porosity values of hard drawn steel cords may vary between 2 and 25%, for instance between 3 and 20%.

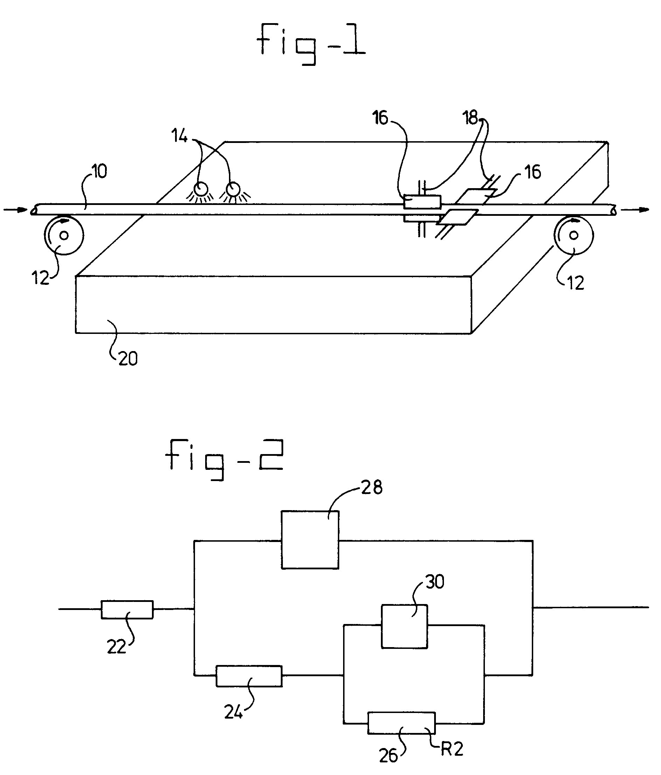

Subsequently the wire, having its final diameter, is covered with the corrosion inhibiting composition according to the invention, as illustrated in Fig. 1. Wire 10 follows a straight path over guiding wheels 12. From one or more tubes 14 which are provided with holes the corrosion inhibiting composition is dripped on the wire. Somewhat further, downstream, the excess of corrosion inhibiting composition is removed by means of for instance a felt material 16, which is pressed at several sides against wire 10 by means of rods 18. The felt material 16 may be saturated with the corrosion inhibiting composition. After the wiping action by the felts the wire can be dried in a furnace. Recuperation of the corrosion inhibiting composition which drips from the wire 10 or from the felt material 16 may occur by using a recuperation bath 20. Then several wires are twined to a steel cord. Finally the steel cord is wound on a coil for storage and transportation purposes.

The covering with the corrosion inhibiting composition according to the invention may also be done after having twisted the wires to a steel cord.

The corrosion behaviour of steel cord covered with a corrosion inhibiting composition according to the invention is simulated and determined according to the standard procedure: "Corrosion tests and standards: application and interpretation, ASTM MNL 20, pp. 86-88, ASTM G3-89, ASTM G5-82, ASTM G15-85a and ASTM STP 727 and by means of the so-called gel test, which has been described in EP-A-0 290 086. In this gel test the steel cord is used as working electrode in an electrochemical cell comprising reference electrodes. An electric current having changing frequencies is applied to the electrochemical cell and per applied frequency the amplitude and phase of the resulting electric voltage is determined.

For analysis of the dynamic corrosion behaviour the electric equivalent circuit according to Fig. 2 is used. In this figure the elements 22, 24 and 26 represent electric resistors (impedance values having only a real part) and elements 28 and 30 represent elements having a constant phase.

The major value in this equivalent circuit is the value of the electric resistor 26 ($R_2$). The higher the value of this resistor, the longer the corrosion resistance of the tested steel cord. Another parameter, next to the resistance value of electric resistor 26, which is used for the determination of the corrosion resistance, is the so-called "inhibition rating" as defined in "Compendium of Chemical Terminology", IUPAC Recommendations, Blackwell Scientific Publications, 1987, p. 198:

$$I = (V_o - V)/V_o$$

wherein

I      represents the corrosion inhibition rating (in percent);
$V_o$      represents the corrosion rate of a non-treated steel cord with $V_o = 1/R_2$
V      represents the corrosion rate of a treated steel cord with $V = 1/R_2$
$R_2$      is the resistance value of electric resistor 22.

The other important property i.e. the adherence between the rubber and a steel cord treated according to the invention is determined as follows. A non-treated steel cord, together with a treated steel cord is embedded in an industrial rubber composition which is subsequently vulcanized. Both steel cords are pulled out from the vulcanized rubber and the forces necessary therefore are measured and compared resulting in the "adherence loss rating."

With respect to the above defined ratings the following ranges are given:

| corrosion inhibition rating: | >60% | good |
|---|---|---|
| | 50-60% | good to moderate |
| | <50% | moderate to poor |
| adherence loss rating: | <4% | good |
| | 4-6% | good to moderate |
| | 6-10% | moderate |
| | >10% | poor. |

The invention is illustrated by the following examples but is not in any way limited thereto. If not indicated otherwise the % in the composition are wt %.

<u>Example 1</u>

A steel cord is manufactured and treated in the above-defined way with a corrosion inhibiting composition according to the invention composed of the following components:

| Mineral seal oil | 88.7 % |
|---|---|
| Naphthenic Acid 13, Barium soap | 9.8 % |
| Butyldiethyleneglycol | 1.3 % |
| Tolutriazole | 0.2 % |
| Total | 100 % |

Further physical properties of said composition are:

- viscosity at 40°C: 7.0 mm$^2$/s (Cannon Fenske normal)
- density at 20°C: 0.868 g/cm$^3$
- boiling point: above 100°C
- melting point: below 4°C
- flash point: 131°C (according to the Cleveland open cup method)
- not soluble in water
- oily film type.

The following table illustrates the results for the corrosion resistance i.e. the corrosion inhibition rating and the adherence with the rubber, based on an industrial rubber composition.

| | $R_2$ after 1.5 ho ur (ohm) | $R_2$ after 20 hours (ohm) | I after 1.5 hour (%) | I after 20 hours (%) | adherence loss rating (%) |
|---|---|---|---|---|---|
| non-treated steel cord | 2026 | 1683 | | | |
| steel cord treated according to the invention not embedded in rubber | 8781 | 4642 | 77 | 64 | |
| non-treated steel cord embedded in rubber | | | | | 0 |
| treated steel cord embedded in rubber | | | | | 8.7 |

As derivable from the above table a steel cord treated according to the invention shows a considerable improvement for the corrosion resistance without a substantial loss of adherence.

Further to the results illustrated in the above table, it is determined that the value of resistor $R_2$ of the steel cord treated according to the invention and embedded in rubber does rise, compared to a non-treated steel cord embedded in rubber. This means that not only the corrosion resistance of the steel cord treated according to the invention is higher during storage and transport but also after vulcanization in the rubber.

Example 2

| Miner al seal oil | 68.7 % |
|---|---|
| Ester of neopentyl glycol and cocos fatty acids | 15.0% |
| Naphthenic Acid 13, Barium Soap | 9.8 % |
| Butyldiethyleneglycol | 1.3 % |
| Tolutriazole | 0.2 % |
| C12-13 Technical alcohol | 5 % |
| Total | 100 % |
| Corrosion inhibition rating, if compared with non-treated reference | 59 % |
| Adherence loss rating, if compared with non-treated reference | 4 % |

Example 3

| Mineral seal oil | 72.9 % |
|---|---|
| Ester of neopentyl glycol and cocos fatty acids | 10.0% |
| Naphthenic Acid 13, Barium Soap | 9.8 % |
| C12-C13 technical alcohol | 5.0 % |
| Butyldiethyleneglycol | 1.3 % |
| Tolutriazole | 0.16 % |
| Alkylated diphenol | 0.13 % |
| Sulphurized DTBP | 0.33 % |
| Octyl diphenylamine | 0.33 % |
| Total | 100 % |
| Corrosion inhibition rating, if compared with non-treated reference | + 35% |
| Adherence loss rating, if compared with non-treated reference | 4.9% |

Example 4

In this Example a series is shown in which a certain range of concentration of synthetic ester/alchol minimises the adherence loss. This synergy cannot be expected from the state of the art. On the other hand, corrosion inhibition decreases with increasing ester/alcohol concentration. Hence the preferred composition B is a compromise.

A. Low ester/alcohol content

| Mineral oil | 78.5% |
|---|---|
| Naphtenic acid, Ba salt | 10 % |
| Tolutriazol | 0,2% |
| Synthetic ester* | 5 % |
| C12-13 Technical alcohol | 5 % |
| Butyldiethyleneglycol | 1.3% |
| Corrosion inhibition rating, if compared with non-treated reference | 70% |
| Adherence loss rating, if compared with non-treated reference | 2% |

*Synthetic ester: ester of neopentylglycol and C8-18 technical fatty acids.

B. Preferred composition - minimal adherence loss

| Mineral oil | 73.5% |
|---|---|
| Naphtenic acid, Ba salt | 10 % |
| Tolutriazol | 0.2% |
| Synthetic ester* | 10 % |
| C12-13 Technical alcohol | 5 % |
| Butyldiethyleneglycol | 1.3% |
| Corrosion inhibition rating, if compared with non-treated reference | 62 % |
| Adherence loss rating, if compared with non-treated reference | <1 % |

*Synthetic ester: ester of neopentylglycol and C8-18 technical fatty acids.

C. High amount of ester/alcohol

| Mineral oil | 68.5% |
|---|---|
| Naphtenic acid, Ba salt | 10 % |
| Tolutriazol | 0.2% |
| Synthetic ester* | 15 % |
| C12-13 Technical alcohol | 5 % |
| Butyldiethyleneglycol | 1.3 % |
| Corrosion inhibition rating, if compared with non-treated reference | 59% |
| Adherence loss rating, if compared with non-treated reference | 4% |

*Synthetic ester: ester of neopentylglycol and C8-18 technical fatty acids.

Example 5

| | |
|---|---|
| Mineral oil | 93 % |
| Imidazoline phosphate $C_{13}$ alkylester | 2.5% |
| Tolutriazol | 0.5% |
| C12 succinic anhydride | 1 % |
| C12-13 Technical alcohol | 3 % |
| Corrosion inhibition rating, if compared with non-treated reference | 55 % |
| Adherence loss rating, of compared with non-treated reference | 5 % |

Comparative Example 1 - (no corrosion inhibitor of the azole type)

| | |
|---|---|
| Mineral seal oil | 78.4 % |
| Naphthenic Acid 13, Barium soap | 9.8 % |
| Butylglycol | 1.3 % |
| Barium sulphonate (corrosion inhibitor) | 10.5 % |
| Total: | 100% |
| Corrosion inhibition rating, if compared with non-treated reference | + 46% |
| Adherence loss rating, if compared with non-treated reference | 47% |

Comparative Example 2 - (no corrosion inhibitor)

| | |
|---|---|
| Mineral seal oil | 88.9 % |
| Naphthenic Acid 13, Barium soap | 9.8 % |
| Butylglycol | 1.3 % |
| Total | 100 % |
| Corrorsion inhibition rating, if compared with non-treated reference | - 55% |
| Adherence loss rating, if compared with non-treated reference | 2% |

Comparative Example 3 - (no corrosion inhibitor and no co-corrosion inhibitor)

| | |
|---|---|
| Mineral seal oil | 100 % |
| Total | 100 % |
| Corrosion inhibition rating, if compared with non-treated reference | - 15% |
| Adherence loss rating, if compared with non-treated reference | 16% |

**Claims**

1. Corrosion inhibiting composition, suitable for application on steel cords, comprising

    A) a carrier of an oily or waxy type,
    B) active components comprising at least

10

B1) a corrosion-inhibitor of the azole-type;

B2) a co-corrosion-inhibitor, selected from the group consisting of

(a) fatty acids, having 6-24 carbon atoms, aromatic acids and naphthenic acids, which acids have the free acid form or the salt form;

(b) imidazoline derivatives having an $C_{6-24}$ alkyl moiety; and

(c) $C_{6-24}$ alkylsuccinic anhydride compounds; as well as mixtures of compounds defined under (a), (b) and (c); and

C) optionally a compound selected from the group consisting of

C1) a water repellent;

C2) a synthetic ester derived from a $C_{1-10}$ alcohol with 1-12 hydroxyl groups and $C_{6-24}$ fatty acids; and

C3) a $C_{6-18}$ alcohol as well as a mixture of compounds defined under C1), C2) and/or C3).

2. Composition according to claim 1, characterized in that the carrier is selected from oils and waxes of mineral, animal, vegetable and synthetic origin.

3. Composition according to claim 2, characterized in that the carrier is of synthetic origin.

4. Composition according to claim 3, characterized in that the carrier is mineral seal oil.

5. Composition according to any of the claims 1-4, characterized in that the corrosion inhibitor of the azole-type is an aromatic triazole compound.

6. Composition according to claim 5, characterized in that the corrosion inhibitor of the azole-type is tolutriazole.

7. Composition according to any of the claims 1-6, characterized in that the fatty acids include synthetic and natural fatty acids having from 6 to 24 carbon atoms as well as mixtures thereof.

8. Composition according to claim 7, characterized in that the fatty acids have the salt form selected from the group consisting of alkaline metal, alkaline earth metal, ammonium and amine salts.

9. Composition according to any of the claims 1-6, characterized in that the aromatic acids are benzoic acid substituted by one or more $C_{6-24}$ alkyl groups.

10. Composition according to claim 9, characterized in that the aromatic acids have the salt form selected from the group consisting of alkaline metal, alkaline earth metal, ammonium and amine salts.

11. Composition according to any of the claims 1-6, characterized in that the naphthenic acids have the salt form selected from the group consisting of alkaline metal, alkaline earth metal, ammonium and amine salts.

12. Composition according to claim 11, characterized in that the naphthenic acid salt is a naphthenic-13-barium salt.

13. Composition according to any of claims 1-6, characterized in that the imidazoline derivatives are selected from the group consisting of imidazoline phosphate esters having an $C_{6-24}$ alkyl group.

14. Composition according to any of the claims 1-6, characterized in that the $C_{6-24}$ alkyl succinic anhydrides are selected from the group consisting of undecyl, dodecyl and tridecyl succinic anhydride or mixtures thereof.

15. Composition according to any of the claims 1-14, characterized in that the water-repellants are selected from $C_{1-5}$ alcohols and $C_{1-5}$ alkylglycols.

16. Composition according to claim 15, characterized in that the water-repellant is butyldiethyleneglycol.

17. Composition according to any of the cliams 1-16, characterized in that the synthetic ester is the ester of neopentyl glycol and cocos fatty acids.

**18.** Composition according to any of the claims 1-16, characterized in that the synthetic ester is the ester of neopentyl glycol and $C_{8-18}$ technical fatty acids.

**19.** Composition according to any of the claims 1-18, characterized in that the $C_{8-16}$ alcohol is a $C_{12-13}$ technical alcohol.

**20.** Composition according to any of the claims 1-19, characterized in that the percentage of the carrier is 65-95% calculated on the total weight of the composition.

**21.** Composition according to claim 20, characterized in that

- the percentage of the corrosion inhibitor is 0.05 - 5%,
- the percentage of the co-corrosion inhibitor is 4.9 - 20%,
- The percentage of the synthetic ester is 0-20%, preferably 5-15%,
- the percentage of the $C_{6-18}$ alcohol is 0-15%, preferably 4-11%,
- the percentage of the water-repellant is 0.05-5%,

calculated on the total weight of the composition.

fig-1

fig-2

European Patent
Office

**EUROPEAN SEARCH REPORT**

Application Number

EP 96 20 2871

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DD 118 668 A (HERFORT O.) 12 March 1976<br><br>* page 3, paragraph 5; examples 3,4 * | 1,2,5-7, 15,20 | C23F11/10<br>C10M141/06<br>C10M169/04 |
| X | DATABASE WPI<br>Section Ch, Week 9435<br>Derwent Publications Ltd., London, GB;<br>Class A97, AN 94-284337<br>XP002027896<br>& RU 2 009 188 C (GONCHAR V P) , 15 March 1994<br>* abstract * | 1,2,5,7, 8,20 | |
| X | DATABASE WPI<br>Section Ch, Week 7426<br>Derwent Publications Ltd., London, GB;<br>Class A12, AN 74-47967V<br>XP002027897<br>& JP 49 021 299 B (YOKOHAMA RUBBER CO LTD) , 31 May 1974<br>* abstract * | 1,2,5,7, 8 | |
| X | DATABASE WPI<br>Section Ch, Week 8107<br>Derwent Publications Ltd., London, GB;<br>Class H08, AN 81-002465<br>XP002027898<br>& RO 68 531 A (INST TEHN RAFIN) , 26 November 1979<br>* abstract * | 1,2,5,7, 8 | TECHNICAL FIELDS SEARCHED (Int.Cl.6)<br>C23F<br>C10M<br>B29H<br>C08J |
| X | US 5 156 759 A (CULPON JR DOUGLAS H) 20 October 1992<br>* page 3, line 1-43; claim 1 * | 1-3,5,6, 18,20 | |

-/--

The present search report has been drawn up for all claims

| Place of search | Date of completion of the search | Examiner |
|---|---|---|
| THE HAGUE | 20 March 1997 | Torfs, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 96 20 2871

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN<br>vol. 015, no. 133 (C-0820), 2 April 1991<br>& JP 03 017191 A (TOKAI RIKA CO LTD;OTHERS: 01), 25 January 1991,<br>* abstract * | 1-3,5,7, 8,20 | |
| X | GB 1 364 781 A (YOKOHAMA RUBBER CO LTD) 29 August 1974<br>* claims 1-8 * | 1,2,5,20 | |
| X | US 2 890 170 A (RAGBORG W. H.) 9 June 1959<br><br>* example 3 * | 1-3,5, 14,20 | |
| A | FR 1 426 943 A (HOLT PRODUCTS) 4 May 1966<br><br>* example 3 * | 1,2,5, 15,16,20 | |
| A | GB 1 177 873 A (FUJI IRON AND STEEL) 14 January 1970<br>* claims 1-5 * | 1,7,8 | |
| A | GB 742 468 A (THE GILETTE COMPANY) 30 December 1955<br>* page 1, line 110-122; claims 1,11 * | 1,11 | TECHNICAL FIELDS SEARCHED (Int.Cl.6) |
| A | US 2 634 237 A (KOPF W. J.) 7 April 1953 | | |

The present search report has been drawn up for all claims

| Place of search | Date of completion of the search | Examiner |
|---|---|---|
| THE HAGUE | 20 March 1997 | Torfs, F |

EPO FORM 1503 03.82 (P04C01)